# EUROPEAN PATENT SPECIFICATION

(11) **EP 3 065 255 B1**
(45) Date of publication and mention of the grant of the patent: **19.09.2018**
(21) Application number: 14858809.8
(22) Date of filing: 22.10.2014
(51) Int. Cl.: B60L 11/18, H02J 7/00, H01M 10/46, H01R 13/66, H02H 7/26, B60L 3/00, B60L 3/04, H02H 7/18, H02J 7/02

(54) **POWER CONVERSION SYSTEM AND CONNECTOR**
STROMUMWANDLUNGSSYSTEM UND VERBINDER
SYSTEME DE CONVERSION DE PUISSANCE ET CONNECTEUR

(30) Priority: 30.10.2013 JP 2013225377
(43) Date of publication of application: 07.09.2016
(73) Proprietor: Panasonic Intellectual Property Management Co., Ltd., Osaka-shi, Osaka 540-6207 (JP)
(72) Inventor: TAMURA, Hideki, Osaka 540-6207 (JP); KOSHIN, Hiroaki, Osaka 540-6207 (JP)
(74) Representative: Appelt, Christian W.
(86) International application number: PCT/JP2014/005362
(87) International publication number: WO 2015/064062

(56) References cited:
- EP-A1- 2 184 827
- EP-A1- 2 309 617
- JP-A- H07 322 980
- JP-A- 2010 238 576
- JP-A- 2011 015 529
- JP-A- 2011 015 567
- JP-A- 2013 031 348
- US-A1- 2012 319 648

## Description

### TECHNICAL FIELD

The present invention relates generally to power conversion systems and connectors and, more particularly, to a power conversion system to be connected to an electric vehicle equipped with a storage battery and a connector to be used in the power conversion system.

### BACKGROUND ART

In recent years, due to limited resources and environmental issues, electric vehicles are gathering attentions. The electric vehicle includes a storage battery equipped on a vehicle body and to be charged by an external charger, and travels on electrical energy stored in the storage battery. Examples of the electric vehicle (EV) include an electric drive vehicle which is driven by an electric motor, and a plug-in hybrid electric vehicle (PHEV) which is driven by a combination of an engine and an electric motor.

Such kinds of electric vehicles are typically charged by use of a charger/discharger that includes a cable extending from a charger/discharger body and a connector (charge/discharge connector) for connecting the cable to the vehicle (for example, see JP H6-325830 A (hereinafter, referred to as Document 1), JP H7-87607 A (hereinafter, referred to as Document 2), and JP 2013-31348 A (hereinafter, referred to as Document 3)). According to a connector disclosed in Document 1, a charge-connector has a function of indicating information about charging of an electric vehicle. According to a charging display device disclosed in Document 2, a display means for displaying a charging condition is provided to an external body of an electric vehicle so as to be in a vicinity of a power-feeding port of the external body.

According to the charger/discharger disclosed in Document 3, a switch (electromagnet switching device) is provided in a connector and interrupts current when magnitude of a current flowing through a cable is a predetermined value or more. An electric vehicle includes a contactor as a current restriction means, and a storage battery of the electric vehicle is to be connected to the connector via the contactor. However, the charger/discharger disclosed in Document 3 does not have a function to determine whether a malfunction in the switch (contactor) provided in the electric vehicle has occurred. Hence, it is not possible to immediately take countermeasures such as sending an alarm notification or the like to users even when a malfunction such as contact welding of the switch in the electric vehicle occurs.

In this regard, JP 2010-238576 A (hereinafter, referred to as Document 4) discloses a charging system, which controls opening and closing of a contactor, monitors a measured value of a voltage meter provided in a charger/discharger, and determines whether a malfunction in the contactor has occurred. Also, JP 2013-70465 A (hereinafter, referred to as Document 5) discloses a charging system, and the charging system controls opening and closing of a contactor, and a diagnostic unit provided in an electric vehicle determines whether a malfunction in the contactor has occurred.

However, in the charging systems disclosed in Document 4 and Document 5, the unit having a function to detect whether a malfunction in a switch (contactor) provided in the electric vehicle has occurred is provided in the charger/discharger or in the electric vehicle. Therefore, when the charger/discharger or the electric vehicle has a trouble that disrupts such a detection operation, necessary countermeasures cannot be taken any more. For example, in the charging system disclosed in Document 4, when disconnection occurs in an electric wire interconnecting a connector and the charger/discharger, the detection operation cannot be performed any more. In this regard, the charging system disclosed in Document 5 has a reduced concern caused by the disconnection since the diagnostic unit is provided in the electric vehicle. However, in this charging system, the detection of occurrence of a malfunction cannot be performed any more when the contactor has a control trouble.

US 2012/319648 A1 describes an electric vehicle that includes a power receiving connector that is connected to a battery via a relay, and an electric charger includes a power supply connector that is connected to the power receiving connector. When a high voltage is applied to the power receiving connector due to a weld failure of the relay, a warning lamp flashes to notify an operator of the risk. Then the connection state is detected between the connectors. When the connectors are not connected to each other, a warning buzzer issues a warning sound. When the connectors are connected to each other, the warning buzzer is turned off. The power receiving connector is covered by the power supply connector in this manner, the operator is unlikely come in contact with the power receiving connector, and thus the output of a warning sound from the warning buzzer is stopped.

EP 2 184 827 A1 describes a charging monitor having: a switch that is disposed between a load section having a storage battery and an external AC power supply supplying a current to the load section via a plurality of lines and interrupts the supply of the current from the external AC power supply to the load section; a current detection circuit that outputs a detection signal corresponding to a difference in level between currents flowing through the lines; a suppression circuit that suppresses a DC component contained in the detection signal; a filter circuit that filters a plurality of frequency components contained in the detection signal so that attenuation increases as a frequency becomes high; a rectifier smoothing circuit that rectifies and smoothens an output signal obtained when the detection signal passes through the filter circuit and the suppression circuit; and an electric leakage determination circuit that detects an electric leakage and shuts off the switch when the level of the signal smoothened by the rectifier smoothing circuit exceeds a preset reference level.

EP 2 309 617 A1 describes a control pilot circuit of a power cable having a male-type plug generates a pilot signal such that the power cable can be identified as a power cable for charging on the vehicle side. On the other hand, a control pilot circuit of a power cable having a not-shown female-type plug generates the pilot signal such that the power cable can be identified as a power cable for power feeding on the vehicle side. An ECU of a vehicle controls an AC/DC converter in any one of the charging mode and the power feeding mode in response to the pilot signal.

JP 2010 238576 A describes relays that are operated with control power supplied from a charger through a vehicle side connector. An electric vehicle performs closing control of the relays before starting charge of an on-vehicle battery, and performs opening control of the relays after completing charge of the on-vehicle battery. Furthermore, the charger starts supply of the control power through a charger side connector before starting charge of the on-vehicle battery, and continues supply of the control power after stopping supply of charge power according to completion of charge of the on-vehicle battery. Output voltage of the charge power is measured, and a measured result is noticed to the electric vehicle. The electric vehicle detects closing/fixing of the relays on the basis of the measured result.

JP 2013 031348 A describes a charger/discharger that includes a body, a cable, and a charge/discharge connector. An electromagnet switch, interrupting a current flowing through a current monitoring part when a current value of the current is a predetermined value or higher, is provided at the body. An electromagnetic switch, interrupting a current flowing through a current monitoring part when a current value of the current is a predetermined value or higher, is provided at the charge/discharge connector.

JP 2011 015567 A describes an electric vehicle that comprises a storage device, an inverter for driving a rotating electrical machine for running on the power of the storage device, a charging device for charging the storage device on the power of the external power supply which includes relays for opening/closing the power feeding route from the external power supply to the storage device so that a route between the storage device and the inverter may not be interrupted, and a control device that detects the voltage on the external power supply side of the relays while controlling the relays in an open state during the switching operation of the inverter, and determines whether or not the relays are welded based on the detection results.

JP 2011 015529 A describes a charging cable of a vehicle that can be attached to/detached from an external power supply and the vehicle and transmits power from the external power supply to a power storage device loaded on the vehicle. The cable is provided with an authentication device for authenticating that an operator of the charging cable is an operator who is permitted to operate charging. When the authentication device authenticates that the operator is the operator who is permitted to operate charging, charging is started.

JP H07 322980 A describes a suction port body of a vacuum cleaner rotating a rotary brush via the rotating force of a turbine is provided with the rotary brush rotatably provided at a suction port formed on the bottom face of a suction port main body, the turbine rotated by the suction air current, a power generator generating the electric power via the rotating force of the turbine, and an indicator 4displaying the revolving speed of the turbine via the electromotive force of the power generator 30.

### SUMMARY OF THE INVENTION

The present invention has been achieved in view of above circumstances, and an object thereof is to provide a power conversion system capable of detecting occurrence of a malfunction in a switch provided in an electric vehicle even when a trouble occurs in a charger/discharger or an electric vehicle, and a connector to be used in the power conversion system.

A power conversion system according to an aspect of the present invention is defined in claim 2.

A connector according to an aspect of the present invention is defined in claim 1.

The power conversion system and the connector according the aspects of the present invention has an advantageous effect of capable of detecting occurrence of a malfunction in a switch provided in an electric vehicle even when a trouble occurs in a charger/discharger or an electric vehicle.

### BRIEF DESCRIPTION OF THE DRAWINGS

FIG. 1 is a schematic block diagram of a power conversion system according to Example 1.
FIG. 2 is a schematic circuit diagram of a connector according to Example 1.
FIG. 3 is a cutaway perspective view of the connector according to Example 1.
FIG. 4 is a schematic block diagram of a power conversion system according to an embodiment.
FIG. 5 is a schematic circuit diagram of a connector according to Example 2.

### DESCRIPTION

Hereafter, power conversion systems to be connected to electric vehicles equipped with storage batteries and connectors to be used in the power conversion systems are explained.

The electric vehicle includes a storage battery which is equipped on a vehicle body and to be charged by an external charger, and travels on electrical energy stored in the storage battery. The descriptions below are made based on an electric drive vehicle which is driven by an electric motor as an example of the electric vehicle (EV). However, the electric vehicle is not limited to the electric drive vehicle, but may be a plug-in hybrid electric vehicle (PHEV) which is driven by a combination of an engine and an electric motor, or the like.

The power conversion system described hereinafter is configured to bidirectionally perform electric power conversion so that the power conversion system can perform both charging and discharging of the storage battery of the electric vehicle.

Specifically, in a process of charging the storage battery, the power conversion system converts AC (alternate current) power supplied from a commercial power supply (system power supply) or power generation facilities such as a photovoltaic power generation facility attached to a residence into DC (direct current) power, and supplies the resultant power to the electric vehicle to charge the storage battery. In a process of discharging the storage battery, the power conversion system converts DC power discharged from the storage battery into AC power, and supplies the resultant power to the residence to supply electric power to apparatuses and devices in the residence so as to realize Vehicle to Home (V2H) system. However, the power conversion system may be configured to implement either one of charging and discharging of the storage battery, as long as the power conversion system can transmit or receive electric power to or from the storage battery.

The following explanation is made according to a case where the CHAdeMO (trademark) method is employed as a charging method for storage batteries. In this charging method, an Electronic Control Unit (ECU) **46** equipped in an electric vehicle calculates a charge current value in accordance with conditions of the storage battery, such as a remaining amount of the stored energy and the temperature. The power conversion system receives an instruction indicative of the charge current value from the electric vehicle through a Controller Area Network (CAN) communication, and controls an output current value according to the instruction.

However, the concept of the power conversion system and the connector described below are not limited to this example, but may be applied to other charging systems. The apparatus to be connected to the connector is not limited to the electric vehicle, provided that the apparatus includes a storage battery mounted thereon and a switch serving as an in-vehicle switch interposed in a power supply path. The apparatus may be a stationary storage battery device, for example.

### (EXAMPLE 1)

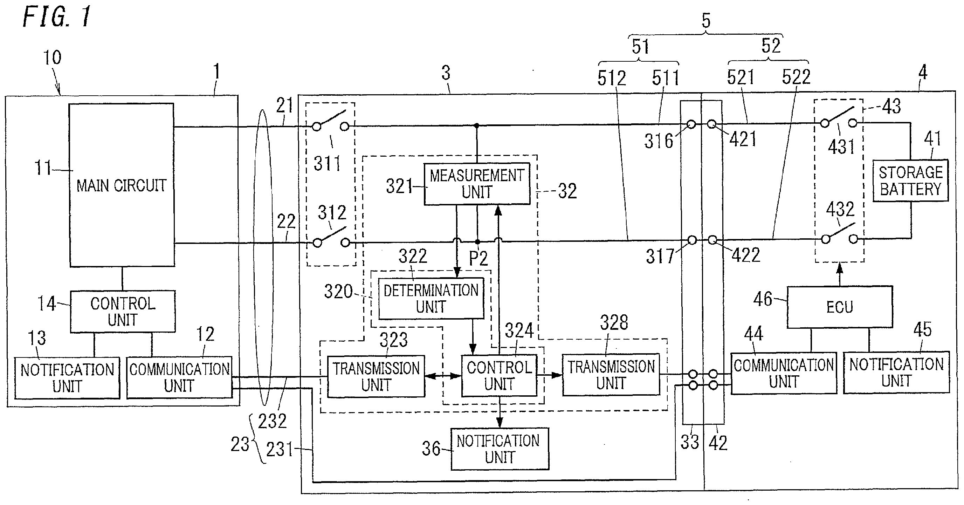

As shown in FIG. 1, a power conversion system **10** includes a power conversion device **1,** and a connector **3** connected to the power conversion device **1** through a cable **2.** The connector **3** is detachably attached to a connection port **42** of an electric vehicle **4** equipped with a storage battery **41** so as to form a power supply path **5** between the power conversion device **1** and the storage battery **41.**

The power conversion system **10** includes a detection circuit **32** that determines whether a malfunction in an in-vehicle switch interposed in part, inside the electric vehicle **4,** of the power supply path **5** has occurred. The power conversion system **10** of the present embodiment includes a protection device. The protection device includes at least one of a switch and a fuse interposed in part, inside the connector **3,** of the power supply path **5.** In the present embodiment, a switch (first switch **31**) provided in the connector **3** serves as the protection device, and a second switch **43** provided in the electric vehicle **4** serves as an in-vehicle switch.

The detection circuit **32** includes a measurement unit **321** configured to measure a voltage at a measurement point including measurement points **P1** and **P2** which is set in part, inside the connector **3** and between the first switch **31** and the electric vehicle **4,** of the power supply path **5** while control of opening the second switch **43** is performed. The measurement unit **321** is provided in the connector **3.** The detection circuit **32** is configured to determine whether the malfunction in the second switch **43** has occurred, based on a measurement result of the measurement unit **321.**

The detection circuit **32** includes a determination unit **322** configured to determine that the malfunction in the second switch (in-vehicle switch) **43** has occurred, when the voltage measured with the measurement unit **321** (voltage at the measurement point including the measurement points **P1** and **P2**) exceeds a threshold. The detection circuit **32** further includes: a transmission unit (first transmission unit) **323** configured to transmit, to the power conversion device **1,** a binary signal indicative of a determination result of the determination unit **322;** and another transmission unit (second transmission unit) **328** configured to transmit the determination result to the electric vehicle **4.** The transmission unit **323** may be a terminal (connection terminal connected to a communication line **23** of the cable **2,** for example), or a signal processing circuit. The transmission unit **328** may be a terminal (terminal provided in a contact part **33** and to be connected to a signal line of the electric vehicle **4,** for example), or a signal processing circuit. The detection circuit **32** further includes a control unit **324.** The control unit **324** is configured to cause the determination unit **322** to determine whether the malfunction in the second switch **43** has occurred, in accordance with an instruction from the power conversion device **1.** The determination unit **322** and the control unit **324** may be realized by a single circuit (micro computer) **320,** for example. The determination unit **322,** the transmission units **323 and 328,** and the control unit **324** are provided in the connector **3.**

The protection device interposed in part, inside the connector **3,** of the power supply path **5** includes at least one of a switch and a fuse. That is, the protection device is not limited to the first switch **31,** but may be a fuse, or a combination of a switch and a fuse. The combination of the switch and the fuse may include the switch and the fuse connected in series.

Hereinafter, a specific configuration of the power conversion system **10** will be described.

The power conversion device **1** includes a main circuit **11** configured to perform power conversion in processes of charging and discharging the storage battery **41.** The main circuit **11** includes a bidirectional AC/DC converter, for example. The main circuit **11** is connected to the power supply path **5,** and is to be electrically connected to the storage battery **41** through the power supply path **5** when the connector 3 is attached to the connection port **42** of the electric vehicle **4.** The power conversion device **1** includes a control unit **14.** Operations of the main circuit **11** are controlled by the control unit **14.** In the process of charging the storage battery **41,** the main circuit **11** converts power supplied from a commercial power supply or the like into DC power within a range of 50 to 600 [V], for example, and supplies the resultant power to the electric vehicle **4.** In the process of discharging the storage battery **41,** the main circuit **11** converts power discharged from the storage battery **41** into AC power of 100 [V], for example, and supplies the resultant power to a residence. In the process of charging the storage battery **41,** the control unit **14** controls the main circuit **11** so that the main circuit **11** converts the power (AC power, for example) supplied from an outside (commercial power supply, for example) into the DC power and supplies the resultant power to the storage battery **41** through the power supply path **5.** In the process of discharging the storage battery **41,** the control unit **14** controls the main circuit **11** so that the main circuit **11** converts the power (DC power) discharged from the storage battery **41** through the power supply path **5** into the AC power.

The power conversion device **1** further includes a communication unit **12** configured to communicate with the electric vehicle **4,** and a notification unit (power conversion device side notification unit) **13** which will be described in detail later. The communication unit **12** is configured to transmit and receive control signals bidirectionally to and from the electric vehicle **4** through the CAN communication. The communication unit **12** and the notification unit **13** are controlled by the control unit **14.**

The power conversion device **1** may be a wall-mounted device to be mounted on a wall of a building, or a stationary device to be placed on a ground.

The cable **2** includes a pair of power lines **21** and **22** (a first power line 21 and a second power line **22**) serving as part of the power supply path **5.** The pair of power lines **21** and **22** are used for power transmission from the main circuit **11** to the storage battery **41** in the process of charging, and for power transmission from the storage battery **41** to the main circuit **11** in the process of discharging. DC power is transferred between the main circuit **11** and the storage battery **41** with the first power line **21** of a high-potential (positive) side line and the second power line **22** of a low-potential (negative) side line.

The cable **2** includes, in addition to the pair of power lines **21** and **22,** a pair of first signal lines (hereinafter, referred to as "CAN signal lines") **231** for transmission of the control signals, and five second signal lines (hereinafter, referred to as "analog control lines") **232.** In FIG. 1, these CAN signal lines **231** and the analog control lines **232** are collectively illustrated as a communication line **23.** When the connector **3** is attached to the connection port **42** of the electric vehicle **4,** the communication line **23** is connected to the electric vehicle **4** through the connector **3,** such that the communication unit **12** of the power conversion device **1** can communicate with the electric vehicle **4** through the communication line **23** (first signal lines **231**).

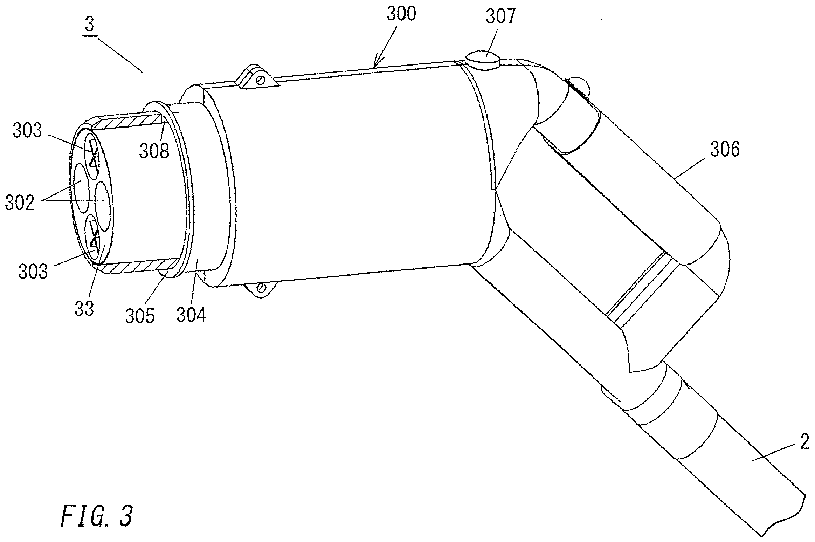

As shown in FIG. 1 and FIG. 3, the connector **3** is connected at an end of the cable **2,** and is to be detachably attached to the connection port **42,** as an inlet, of the electric vehicle **4.** The connector **3** has the contact part **33** electrically connected to the cable **2.** When the contact part **33** is electrically connected to the connection port **42,** the power lines **21** and **22** and the communication line **23** of the cable **2** are electrically connected to the electric vehicle **4.** Specifically, as shown in FIG. 1, the contact part **33** includes a first electrode **316** electrically connected to the first power line **21,** and a second electrode **317** electrically connected to the second power line **22.** When the contact part **33** is electrically connected to the connection port **42,** the first and second electrodes **316** and **317** of the contact part **33** are electrically connected respectively to a pair of electrodes **421** and **422** (a first electrode **421** and a second electrode **422**) which are provided in the connection port **42** of the electric vehicle **4.** Accordingly, the power supply path 5 is formed between the power conversion device **1** and the storage battery **41** when the connector **3** is attached to the connection port **42.** The power supply path **5** includes a pair of electric lines, a high-potential side line and a low-potential side line. Hereinafter, of the power supply path **5** established between the power conversion device **1** and the storage battery **41,** part of the power supply path **5** inside the connector **3** will be referred to as a first power supply path **51,** and part of the power supply path **5** inside the electric vehicle **4** will be referred to as a second power supply path **52.** As shown in FIG. 1, the first power supply path **51** includes a high-potential side line **511** and a low-potential side line **512.** The second power supply path **52** includes a high-potential side line **521** and a low-potential side line **522.**

The connector **3** includes a latching mechanism (described later) to be mechanically engaged with the connection port **42** of the electric vehicle **4** to keep connection between the connector **3** and the connection port **42,** and a locking mechanism (not shown) inhibiting an operation of the latching mechanism. The latching mechanism and the locking mechanism are provided in a connector body **300** (see FIG. 3) of the connector **3.** In the processes of charging/discharging of the storage battery **41,** the connector **3** controls the locking mechanism to a locking condition to inhibit a cancellation of a latching condition of the latching mechanism, thereby preventing detachment of the connector **3** from the connection port **42.**

In the connector **3,** the first power supply path **51** between the cable **2** and the contact part **33** is formed as shown in FIG. 1. The first switch **31** as the protection device interposed in the first power supply path **51** is provided in the connector body **300.** The first switch **31** includes a first contact device **311** interposed in the high-potential side line **511** of the first power supply path **51** and a second contact device **312** interposed in the low-potential side line **512.** In other words, the first switch **31** is a two-pole switch in which the first contact device **311** and the second contact device **312** can be opened and closed (turned off an on). However, the first switch **31** is not limited to the two-pole switch, but may be a one-pole switch including only either one of the first contact device **311** interposed in the high-potential side line **511** of the first power supply path **51** and the second contact device **312** interposed in the low-potential side line **512.**

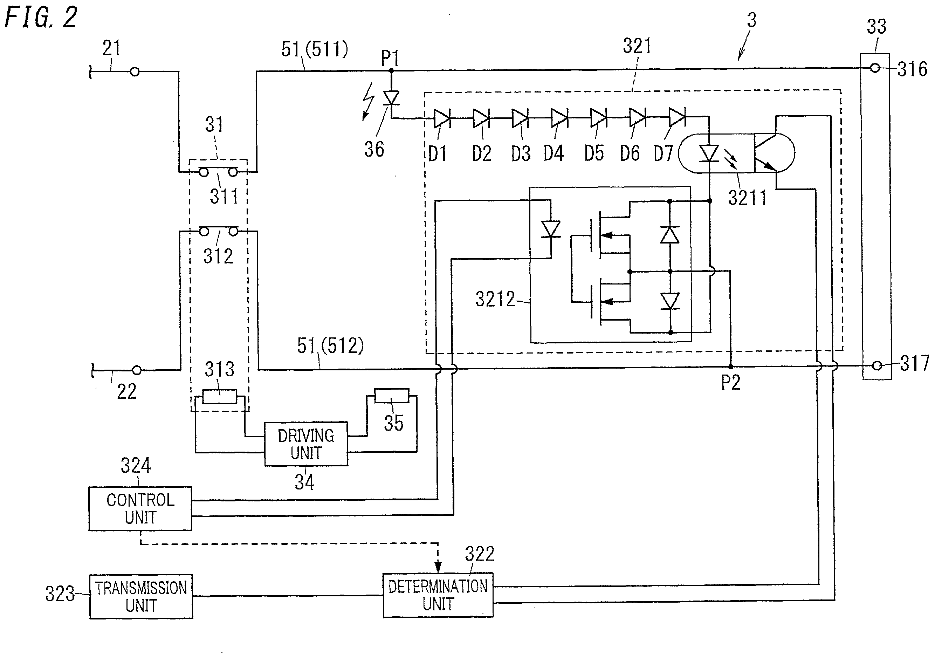

The first switch **31** includes a solenoid **313** (see FIG. 2) as a driving device for opening and closing the first contact device **311** and the second contact device **312.** The first and second contact devices **311** and **312** of the first switch **31** are closed (turned on) when the solenoid **313** is not energized, and both the contact devices **311** and **312** are opened (turned off) when the solenoid **313** is energized. Alternatively, each of the first contact device **311** and the second contact device **312** may be a fuse, which is normally closed, and is opened in response to an excess current.

The connector **3** further includes a driving unit **34** (see FIG. 2) for energizing the solenoid **313,** and a thermistor **35** (see FIG. 2) as a detection element for detecting a temperature of the contact part **33.** The driving unit **34** is configured to energize the solenoid **313** to open the first switch **31** when the temperature detected with the thermistor **35** exceeds a predetermined temperature.

The connector **3** includes a mechanical open/close mechanism (not shown) configured to close both the first and second contact devices **311** and **312** when the contact part **33** is connected to the connection port **42,** and open both the contact devices **311** and **312** when the contact part **33** is not connected to the connection port **42.** The first switch **31** also functions as a circuit breaker, and is configured to be tripped to open so as to break a circuit when an excess current flows through the first power supply path **51** for a predetermined time or more or when a short-circuit current flows through the first power supply path **51.**

As shown in FIG. 1, the connector **3** includes the detection circuit **32** and a notification unit (connector side notification unit) **36.** The detection circuit **32** is configured to determine whether the malfunction in the second switch (in-vehicle switch) **43** provided in the electric vehicle **4** has occurred. The notification unit **36** is configured to give a notification of a detection result of the detection circuit **32** (whether the malfunction in the second switch **43** has occurred). Structures of the detection circuit **32** and the notification unit **36** are described later.

The connector **3** includes a power supply circuit (not shown) configured to generate, from an operation voltage (DC 12 [V], for example) supplied from the power conversion device **1** through the communication line **23,** an operation power, and supplies the operation power to each unit (the detection circuit **32** and the like).

In the electric vehicle **4,** the second power supply path **52** between the connection port **42** and the storage battery **41** is formed as shown in FIG. 1. The electric vehicle **4** includes the second switch **43** as a vehicle contactor interposed in the second power supply path **52.** The second switch **43** includes a first contact device **431** interposed in the high-potential side line **521** of the second power supply path **52** and a second contact device **432** interposed in the low-potential side line **522.** In other words, the second switch **43** is a two-pole switch in which the first contact device **431** and the second contact device **432** can be opened and closed. As with the first switch **31,** the second switch **43** is not limited to the two-pole switch, but may be a one-pole switch including only either one of the first contact device **431** interposed in the high-potential side line **521** of the second power supply path **52** and the second contact device **432** interposed in the low-potential side line **522.**

The second switch **43** is opened and closed under control of an electronic control unit **46** of the electric vehicle **4.** In a basic operation, the electronic control unit **46** is configured to close the second switch **43** in response to a notification from the power conversion system **10** at a start of the process of charging/discharging the storage battery **41,** and open the second switch **43** at an end of the process of charging/discharging the storage battery **41.** Accordingly, the connection port **42** (specifically, first and second electrodes **421** and **422**) can be connected to the storage battery **41** during the process of charging/discharging the storage battery **41,** and can be electrically disconnected from the storage battery **41** during a period other than the process of charging/discharging the storage battery **41.**

Hereinafter, a charging operation (charge-flow) of the storage battery **41** by the power conversion system **10** is described briefly.

When receiving a predetermined manual operation for starting the process of charging through a console unit (not shown) after the connector **3** is connected to the connection port **42,** the control unit **14** of the power conversion system **10** starts the charge-flow to transmit a charge-start-signal to the electric vehicle **4** through the communication unit **12.** When receiving the charge-start-signal, the electronic control unit **46** of the electric vehicle **4** starts the CAN communication with the control unit **14** of the power conversion system **10,** and transmits and receives data such as information on capacitance of the storage battery **41** and the like.

When a preparation for charging is completed, the electronic control unit **46** of the electric vehicle **4** transmits a charge-permission-signal to the power conversion system **10** through a communication unit **44.** When receiving the charge-permission-signal, the control unit **14** of the power conversion system **10** causes the power conversion device **1** to supply a drive current to the connector **3** to drive the locking mechanism of the connector **3** so as to switch the locking mechanism into the locking condition. Then, the control unit **14** of the power conversion system **10** provides, to the electronic control unit **46** of the electric vehicle **4,** a notification indicating that the preparation for charging has completed.

When the notification indicative of the completion of the preparation for charging is supplied from the power conversion system **10** to the communication unit **44,** the electronic control unit **46** of the electric vehicle **4** closes the second switch **43** and provides an instruction including a charge current value to the power conversion system **10.** Accordingly, the power conversion system **10** starts to output current to charge the storage battery **41.**

When an amount of stored energy of the storage battery **41** reaches a predefined value, the electronic control unit **46** of the electric vehicle **4** transmits a stop-request to the power conversion system **10** through the communication unit **44.** The electronic control unit **46** of the electric vehicle **4** confirms that a charge-current decreases down to a predetermined value, and then opens the second switch **43.** When receiving the stop-request, the control unit **14** of the power conversion system **10** stops outputting the current, performs a predetermined diagnostic process, and then controls the locking mechanism of the connector **3** so as to switch the locking mechanism into an un-locking condition to finish the charge-flow.

Next, a discharging operation (discharge-flow) of the storage battery **41** by the power conversion system **10** is described briefly.

When receiving a predetermined manual operation for starting the process of discharging through the console unit (not shown) after the connector **3** is connected to the connection port **42,** the control unit **14** of the power conversion system **10** starts the discharge-flow to transmit a discharge-start-signal to the electric vehicle **4** through the communication unit **12.** When receiving the discharge-start-signal, the electronic control unit **46** of the electric vehicle **4** starts the CAN communication with the control unit **14** of the power conversion system **10,** and transmits and receives data such as information on capacitance of the storage battery **41** and the like.

When a preparation for discharging is completed, the electronic control unit **46** of the electric vehicle **4** transmits a discharge-permission-signal to the power conversion system **10** through the communication unit **44.** When receiving the discharge-permission-signal, the control unit **14** of the power conversion system **10** causes the power conversion device **1** to supply the drive current to the connector **3** to drive the locking mechanism so as to switch the connector **3** into the locking condition. Then, the control unit **14** of the power conversion system **10** provides, to the electronic control unit **46** of the electric vehicle **4,** a notification indicating that the preparation for discharging has completed.

When the notification indicative of the completion of the preparation for discharging is supplied from the power conversion system **10** to the communication unit **44,** the electronic control unit **46** of the electric vehicle **4** closes the second switch **43** to start to discharge energy from the storage battery **41** to the power conversion system **10.**

When the amount of the stored energy of the storage battery **41** reaches a predefined value, the electronic control unit **46** of the electric vehicle **4** transmits a stop-request to the power conversion system **10** through the communication unit **44.** The electronic control unit **46** of the electric vehicle **4** confirms that a discharge-current decreases down to a predetermined value, and then opens the second switch **43.** When receiving the stop-request, the control unit **14** of the power conversion system **10** performs a predetermined diagnostic process, and then controls the locking mechanism of the connector **3** to the un-locking condition to finish the discharge-flow.

As shown in FIG. 1, the power conversion system **10** includes the detection circuit **32** configured to determine whether the malfunction in the second switch **43** in the electric vehicle **4** has occurred. The detection circuit **32** includes the measurement unit **321** configured to measure a voltage at the measurement point including the measurement points **P1** and **P2** set in the power supply path **5,** and this measurement unit **321** is provided in the connector **3.** It should be noted that the measurement unit **321** measures the voltage at the measurement point including the measurement points **P1** and **P2,** which is set in part, between the first switch **31** and the electric vehicle **4,** of the power supply path **5,** that is, which is set in part, between the first switch **31** and the contact part **33,** of the first power supply path **51.** The measurement unit **321** is configured to measure the voltage at the measurement point including the measurement points **P1** and **P2** while the control of opening the second switch **43** is performed.

The points **P1** and **P2** include a first measurement point **P1** in the high-potential side line of the power supply path **5,** and a second measurement point **P2** in the low-potential side line of the power supply path **5.** In other words, the measurement unit **321** is configured to measure the voltage between the first measurement point **P1** and the second measurement point **P2** as the voltage at the measurement point including the measurement points **P1** and **P2.** The first measurement point **P1** is in part, between the first contact device **311** and the first electrode **316,** of the high-potential side line **511** of the first power supply path **51.** The second measurement point **P2** is in part, between the second contact device **312** and the second electrode **317,** of the low-potential side line **512** of the first power supply path **51.**

Accordingly, the measurement unit **321** of the detection circuit **32** can measure a voltage applied from the electric vehicle **4** to the first power supply path **51** regardless of a condition whether the first switch **31** is opened or closed. Therefore, the detection circuit **32** can determine whether the malfunction in the second switch **43** has occurred based on the measurement result of the measurement unit **321,** even while the first switch **31** is opened as a result of the temperature of the contact part **33** exceeding the predetermined temperature for example.

In the power conversion system **10** the detection circuit **32** includes the determination unit **322** configured to determine whether the malfunction in the second switch **43** has occurred, and the transmission unit **323** configured to transmit the binary signal indicative of the determination result of the determination unit **322** to the power conversion device **1.** The determination unit **322** and the transmission unit **323** are provided in the connector **3.** The determination unit **322** is configured to determine that the malfunction in the second switch **43** has occurred, when the voltage (measured value) measured with the measurement unit **321** exceeds the threshold.

It should be noted that the second switch **43** may not be opened due to contact welding even when the electronic control unit **46** of the electric vehicle **4** controls the second switch **43** to open, for example. In such a case, a voltage is applied from the storage battery **41** to the measurement point including the measurement points **P1** and **P2** of the first power supply path **51** through the second switch **43.** That is, the condition "while control of opening the second switch **43** is performed (when the electronic control unit **46** controls the second switch **43** to open)" mentioned in the specification indicates a condition where an instruction signal for opening the second switch **43** is generated and, note that, may include a state where a contact device (the first contact device **431** and/or the second contact device **432**) of the second switch **43** is not physically opened due to contact welding or the like. Therefore, there is a possibility that the voltage is applied from the storage battery **41** to the measurement point including the measurement points **P1** and **P2** through the second switch **43** even when the control of opening the second switch **43** is performed, because the contact device of the second switch **43** may not be opened actually due to a malfunction (such as contact welding) in the second switch **43.**

In this regard, the detection circuit **32** is configured to measure the voltage at the measurement point including the measurement points **P1** and **P2** by the measurement unit **321** while control of opening the second switch **43** is performed. The detection circuit **32** is configured to determine that no malfunction has occurred in the second switch **43,** when the measured value is equal to or less than the threshold, and that the malfunction has occurred in the second switch **43,** when the measured value exceeds the threshold. Further, the detection circuit **32** is configured to transmit the binary signal including either one of a first value indicative of "presence of malfunction" and a second value indicative of "absence of malfunction", to the power conversion device **1** through the transmission unit **323** and to the electric vehicle **4** through the transmission unit **328,** in accordance with the determination result of the determination unit **322.** The detection circuit **32** is configured to compare the measured value with the threshold while no power is supplied from the power conversion device **1** to the measurement point including the measurement points **P1** and **P2** (for example, when the main circuit **11** of the power conversion device **1** stops outputting power).

Specifically, as shown in FIG. 2, the measurement unit **321** includes multiple (seven, in this example) constant current diodes **D1** to **D7,** a photocoupler **3211,** and a semiconductor relay **3212.** The semiconductor relay **3212** is a photo-metal-oxide-semiconductor relay (photo-MOS relay; trademark), but may be a photocoupler. The multiple constant current diodes **D1** to **D7,** a primary side of the photocoupler **3211,** and a secondary side of the semiconductor relay **3212** are connected in series with each other and are connected between the measurement points **P1** and **P2** of the first power supply path **51** via a light emitting diode serving as the notification unit **36.** A primary side of the semiconductor relay **3212** is connected to the control unit **324** described in detail later. A secondary side of the photocoupler **3211** is connected to the determination unit **322.**

In the measurement unit **321** having this structure, when the semiconductor relay **3212** is turned on in response to an output of the control unit **324,** the voltage between the measurement points **P1** and **P2** of the first power supply path **51** is applied to a series circuit of the constant current diodes **D1** to **D7** and the primary side of the photocoupler **3211** via the notification unit **36.** Therefore, when the voltage between the measurement points **P1** and **P2** of the first power supply path **51** exceeds the sum of forward voltages of the light emitting diode as the notification unit **36,** the constant current diodes **D1** to **D7,** and the primary side of the photocoupler **3211,** the secondary side of the photocoupler **3211** in the measurement unit **321** is in a conducting state (turned on).

Accordingly, the determination unit **322** monitors an output side of the photocoupler **3211** while the control unit **324** controls the semiconductor relay **3212** to turn on, and determines that a malfunction such as contact welding has occurred in the second switch **43** when the output side of the photocoupler **3211** is turned on (in the conducting state). Also, when electric current flows through the primary side of the photocoupler **3211** due to the malfunction occurred in the second switch 43, the light emitting diode as the notification unit **36** emits light so as to notify that the malfunction in the second switch **43** has occurred. The transmission unit **323** is connected to the communication line **23** of the cable **2,** and transmits the binary signal including either one value (the "first value" indicative of the presence of the malfunction, or the "second value" indicative of the absence of the malfunction) to the power conversion device **1** in accordance with the determination result of the determination unit **322.** The transmission unit **328** transmits the binary signal including either one value to the electric vehicle **4** in accordance with the determination result of the determination unit **322.** The transmission units **323** and **328** are each connected to the determination unit **322** via the control unit **324** in the example of FIG. 1, but the transmission units **323** and **328** may be directly connected to the determination unit **322** as illustrated in FIG. 2.

The control unit **324** is configured to turn on the semiconductor relay **3212** in response to an instruction from the power conversion device **1** to cause the determination unit **322** to determine whether the malfunction in the second switch **43** has occurred. The control unit **324** is triggered to turn on the semiconductor relay **3212** by a start of the diagnostic process performed immediately before the locking mechanism of the connector **3** is switched from the locking condition to the un-locking condition in the charge-flow and the discharge-flow.

Specifically, in the charge-flow and the discharge-flow, when receiving the stop-request from the electric vehicle **4,** the power conversion system **10** performs the diagnostic process and then switches the locking mechanism of the connector **3** to the un-locking condition. The start of the diagnostic process is used as the trigger for performing a determination of a malfunction in the second switch **43.** Accordingly, the measurement unit **321** measures the voltage at the measurement point including the measurement points **P1** and **P2** while the control of opening the second switch **43** is performed. Then, the determination unit **322** determines that the malfunction in the second switch **43** has occurred, when the measured value exceeds the threshold.

The threshold corresponding to a state where the semiconductor relay **3212** is turned on is the sum of forward voltages of the light emitting diode as the notification unit **36,** the constant current diodes **D1** to **D7,** and the primary side of the photocoupler **3211.** Therefore, the determination unit **322** determines that the malfunction in the second switch **43** has occurred, when the measured value (voltage between the measurement points **P1** and **P2**) measured with the measurement unit **321** exceeds the sum of the forward voltages.

Note that, the structure of the measurement unit **321** shown in FIG. 2 is an example, and the measurement unit **321** is not limited to this specific circuit configuration. The structure of the measurement unit **321** can be appropriately modified, as long as the measurement unit **321** has a function to measure the voltage at the measurement point including the measurement points **P1** and **P2** set in part, between the first switch **31** and the electric vehicle **4,** of the power supply path **5** while the control of opening the second switch **43** is performed.

For example, when the low-potential side line **512** of the power supply path 5 (first power supply path **51**) has an electric potential of 0 [V], the measurement unit **321** may measure a voltage of the first measurement point **P1** (that is, a voltage between the first measurement point **P1** and a ground), and the determination unit may compare the measured voltage of the first measurement point **P1** with the threshold. Note that a condition "the low-potential side line **512** of the power supply path **5** (first power supply path **51**) has an electric potential of 0 [V]" is not limited to a case where the electric potential of the low-potential side line **512** of the power supply path **5** is exactly 0 [V], but may include a case where it is substantially 0 [V]. Note that a condition "the low-potential side line **512** of the power supply path **5** has an electric potential of substantially 0 [V]" indicates a condition where the electric potential of the low-potential side line **512** of the power supply path **5** is sufficiently smaller than the voltage between the measurement point **P1** and the ground and thus can be regarded as substantially 0 [V].

As shown in FIG. 3, the connector **3** includes the connector body **300** and the cable **2.** The connector body **300** has a cylindrical shape as a whole, and includes the contact part **33** and a handle **306** on front and rear ends thereof, respectively. That is, the contact part **33** defines a front side of the connector **3,** and the handle **306** defines a rear side of the connector **3.** The contact part **33** has four round holes **302** and **303** opened in a front face thereof. Contacts for a power supply (not shown) connected to the power lines **21** and **22** of the cable **2** are housed in the two round holes **302** having a relatively large diameter. Each of two round holes **303** having a relatively small diameter is partitioned into four sections, and contacts for transmission or grounding (not shown) are individually housed in the sections. The contact for transmission is connected to the communication line **23.**

A housing **304** having a cylindrical shape is provided on a rear end of the contact part **33** so as to surround a rear end side of the contact part **33** and be movable in a front-rear direction. The housing **304** has a flange **305** on a front end thereof, and is biased forward by a spring (not shown) housed in the connector body **300.** When the contact part **33** is inserted into an inlet, the flange **305** is pressed against a front face of the inlet, so that the housing **304** is moved rearward. As a result, engagement claws (latching mechanism) **308,** which are pressed by the housing **304** to be retracted to an inside of the connector body **300,** are allowed to move outside from the connector body **300** and then are engaged with an engagement groove (not shown) of the inlet. Note that shape and structure of the housing **304** are not limited to those in the present example. When a release button **307** provided on the connector body **300** is pressed, the engagement claws **308** are retracted to the inside of the connector body **300** and disengaged from the engagement groove.

The notification unit **36** is housed in the connector body **300** so as to be visible from an outside of the connector body **300.** For example, preferably, the release button **307** is made of light-transmissive material (such as acrylic resin and polycarbonate resin) so that the light emitted from the light emitting diode of the notification unit **36** can pass through the release button **307.** Also, for safety reason, it is undesirable that the connector **3** is detached from the connection port **42** of the electric vehicle **4** while the malfunction occurs in the second switch **43.** In this regard, the notification unit **36** may include a red light mitting diode so as to illuminate the release button **307** with red light when the malfunction occurs in the second switch **43.** In this case, it is expected that persons are psychologically induced not to operate the release button **307**

The control unit **14** of the power conversion device **1** shown in FIG. 1 is configured to receive the detection result of the detection circuit **32,** namely the binary signal transmitted from the transmission unit **323,** through the communication unit **12,** and give a notification through the notification unit **13** when the malfunction in the second switch **43** has occurred (when receiving the first value). The notification unit **13** is configured to give the notification by displaying, on a display (not shown) of the power conversion device **1,** a message indicating that a malfunction has occurred in the second switch **43,** for example. Also, preferably, the power conversion device **1** is configured to, when the malfunction in the second switch **43** has occurred, keep the locking mechanism in the locking condition so as not to switch to the un-locking condition, and display a message indicating this situation on the display. The power conversion device **1** is configured to, when no malfunction has occurred in the second switch **43** (when receiving the second value), switch the locking mechanism to the un-locking condition after completion of the diagnostic process.

The electronic control unit **46** of the electric vehicle **4** is configured to receive the binary signal transmitted from the transmission unit **328** through the communication unit **44,** and give a notification through a notification unit (electric vehicle side notification unit) **45** when the malfunction in the second switch **43** has occurred. The notification unit **45** is configured to give the notification by displaying, on a meter panel of a cockpit of the electric vehicle **4,** a message indicating that the malfunction has occurred in the second switch **43,** for example.

All of the measurement unit **321,** the determination unit **322,** the transmission units **323** and **328,** and the control unit **324** of the detection circuit **32** are provided inside the connector **3.**

As described above, the power conversion system **10** includes the power conversion device **1** and the connector **3.** The connector **3** is connected to the power conversion device **1** through the cable **2** and is configured to be detachably attached to the connection port **42** of the electric vehicle **4** equipped with the storage battery **41** so as to form the power supply path **5** between the power conversion device **1** and the storage battery **41.** The power conversion system **10** includes the detection circuit **32.** The detection circuit **32** is configured to determine whether a malfunction in the in-vehicle switch (second switch **43**) interposed in part, inside the electric vehicle **4,** of the power supply path **5** has occurred. The detection circuit **32** includes the measurement unit **321** configured to measure a voltage at the measurement point **P1, P2** which is set in part, inside the connector **3,** of the power supply path 5 (in the first power supply path **51**), and the determination unit **322** configured to determine that the malfunction in the in-vehicle switch (second switch **43**) has occurred, when the voltage measured with the measurement unit **321** exceeds the threshold. The measurement unit **321** and the determination unit **322** are provided in the connector **3.** The detection circuit **32** is configured to determine whether the malfunction has occurred, based on the determination result of the determination unit **322.**

The power conversion system **10** of the present embodiment includes the notification unit **36** configured to give a notification of the detection result of the detection circuit **32.**

The connector **3** is to be used in the power conversion system **10.**

In the present example described above, the power conversion system **10** includes the detection circuit **32** configured to determine whether the malfunction in the second switch **43** interposed in part, inside the electric vehicle **4,** of the power supply path **5** has occurred, and accordingly it is possible to determine whether the malfunction in the second switch **43** provided in the electric vehicle **4** has occurred. Furthermore, the notification unit **36** for giving the notification of the detection result of the detection circuit **32** is provided in the connector **3,** and accordingly it is possible to give the notification indicating whether the malfunction has occurred in the second switch **43.** Therefore, according to the power conversion system **10,** it is possible to immediately take necessary countermeasures if the malfunction such as contact welding occurs in the second switch **43** in the electric vehicle **4.**

The detection circuit **32** includes the measurement unit **321** configured to measure the voltage at the measurement point **P1, P2** set in part, between the first switch **31** and the electric vehicle **4,** of the power supply path **5,** while the control of opening the second switch **43** is performed. The measurement unit **321** is provided in the connector **3.** The detection circuit **32** determines whether the malfunction in the second switch **43** has occurred, based on the measurement result of the measurement unit **321.** Accordingly, the detection circuit **32** can still determine whether the malfunction in the second switch **43** has occurred based on the measurement result of the measurement unit **321,** even when the first switch **31** is opened as a result of the temperature of the contact part **33** exceeding the predetermined temperature for example.

In addition, the detection circuit **32** of the present embodiment includes the determination unit **322** configured to determine that the malfunction in the second switch **43** has occurred, when the voltage measured with the measurement unit **321** exceeds the threshold. The determination unit **322** is provided in the connector **3.** Accordingly, the detection circuit **32** can determine whether the malfunction in the second switch **43** has occurred, by a simple processing of comparing the voltage measured with the measurement unit **321** with the threshold.

Preferably, the detection circuit **32** includes the transmission units **323** and **328** configured to transmit the binary signal indicative of the determination result of the determination unit **322** to the power conversion device **1** and the electric vehicle **4,** respectively. The transmission units **323** and **328** are provided in the connector **3.** According to the detection circuit **32** of this configuration, determination of whether the malfunction has occurred in the second switch **43** is performed in the connector **3,** and merely the binary signal indicative of the determination result is transmitted to the power conversion device **1.** Therefore, it is possible to reduce the amount of data transmitted from the detection circuit **32** to the power conversion device **1,** and the signal is less likely to be affected by noise, compared to a case where a measured value of the measurement unit **321** is transmitted to the power conversion device **1.**

Preferably, the connector **3** includes the latching mechanism **308** to be mechanically engaged with the connection port **42** to keep connection between the connector **3** and the connection port **42,** and the release button **307** for canceling the latching condition of the latching mechanism **308** in response to manual operation. The notification unit **36** is configured to illuminate the release button **307** to give the notification of the detection result.

Preferably, the power conversion system **10** has a following configuration. The measurement point includes the first measurement point **P1** in the high-potential side line **511** of the power supply path (first power supply path **51**) and the second measurement point **P2** in the low-potential side line **512** of the power supply path (first power supply path **51**). The measurement unit **321** includes at least one diode component (the multiple constant current diodes **D1** to **D7** and the primary side of the photocoupler **3211**) connected between the first measurement point **P1** and the second measurement point **P2.** The notification unit **36** is connected between the first measurement point **P1** and the second measurement point **P2** so as to be connected in series with the at least one diode component such that the notification unit **36** operates with a voltage to be applied between the first measurement point **P1** and the second measurement point **P2.**

Preferably, the notification unit **36** includes the light emitting diode.

Preferably, the power conversion system **10** has a following configuration. The measurement unit **321** further includes the photocoupler **3211.** The primary side of the photocoupler **3211** serves as part or all of the at least one diode component, and is connected between the first measurement point **P1** and the second measurement point **P2.** The secondary side of the photocoupler **3211** is to be turned on when the voltage between the first measurement point **P1** and the second measurement point **P2** measured with the measurement unit **321** exceeds the threshold. The determination unit **322** is configured to determine that the malfunction in the in-vehicle switch (second switch **43**) has occurred, when the secondary side of the photocoupler **3211** is turned on.

Preferably, the measurement unit **321** further includes the relay (semiconductor relay **3212**) connected in series with the at least one diode component. The connector **3** further includes the control unit **324** configured to turn on the relay **3212** in response to an instruction from the power conversion device **1.**

Preferably, the power conversion system **10** includes the protection device which includes at least one of a switch and a fuse interposed in part, inside the connector **3,** of the power supply path (in the first power supply path **51**).

The notification unit **36** may not include the light emitting diode, but may include a piezoelectric buzzer in place of the light emitting diode, for example. In this case, when a malfunction occurs in the second switch **43,** electric current flows through the piezoelectric buzzer and the piezoelectric buzzer beeps. That is, the determination result of the detection circuit **32** can be announced by sound. Alternatively, the notification unit **36** may include both the light emitting diode and the piezoelectric buzzer so that the result is announced by the light and the sound. In alternatives, the notification unit **36** may include a piezoelectric vibrator configured to vibrate the connector body **300** for the notification, or the notification unit 36 may include a liquid crystal display to display messages indicating the detection result of the detection circuit **32** and necessary countermeasure against the malfunction.

### (EMBODIMENT)

The power conversion system of Example 1 is configured to give the notification indicating whether the malfunction in the second switch **43** has occurred, through both the notification unit (connector side notification unit) **36** of the connector **3** and the notification unit (power conversion device side notification unit) **13** of the power conversion device **1.** The power conversion system of Example 1 is also configured to give the notification indicting that the malfunction in the second switch **43** has occurred, to the electric vehicle **4** through the transmission unit **328.** However, normally, notification of the malfunction may be given by only the notification unit **13** of the power conversion device **1.** In this case, however, when a disconnection occurs in the cable **2** (especially, in the communication line **23**), the detection result of the detection circuit **32** cannot be transmitted from the transmission unit **323** of the connector **3** to the power conversion device **1.** Hence, the notification unit **13** may not be able to give the notification of the malfunction.

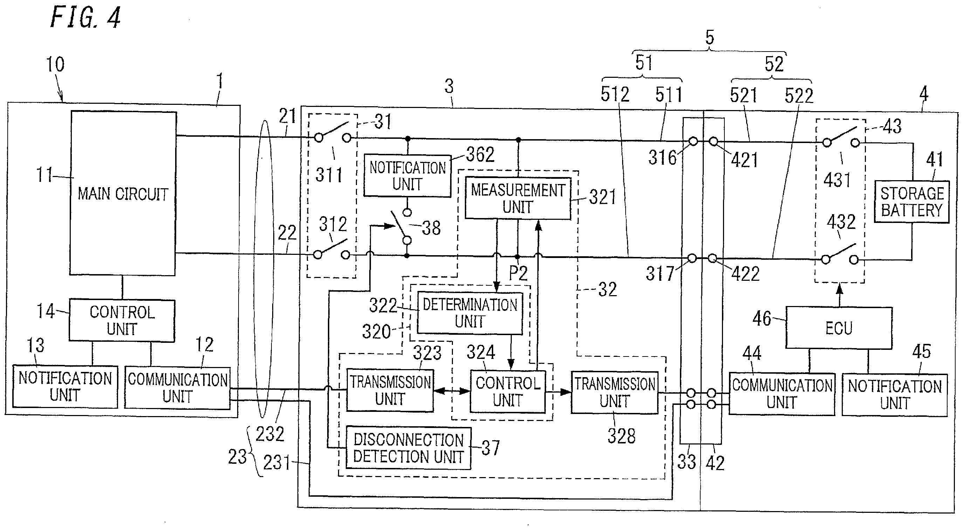

In this regard, in a power conversion system of the present embodiment, a detection circuit **32** includes a disconnection detection unit **37** configured to determine whether disconnection in a cable **2** has occurred, as shown in FIG. 4. The disconnection detection unit **37** is provided in the connector **3.** Further, a notification unit (connector side notification unit) **362** is configured to give a notification, when the disconnection detection unit **37** determines that the disconnection in the cable **2** has occurred and the detection circuit **32** determines that a malfunction in a second switch **43** has occurred.

For example, the disconnection detection unit **37** is configured to monitor a voltage of a communication line **23,** and determine that the disconnection has occurred, when the voltage of the communication line **23** is equal to or less than a reference value while the connector 3 is connected to an connection port **42** of an electric vehicle **4.** The disconnection detection unit **37** is configured to close a switch **38** when determining that the disconnection in the communication line **23** has occurred.

The notification unit **362** of the present embodiment is connected between points, between a first switch **31** and a set of the measurement points **P1** and **P2,** of lines of a first power supply path **51** (between a high-potential side line **511** and a low-potential side line **512**) via the switch **38.** Therefore, when the switch **38** is closed while a voltage of a storage battery **41** is applied between the measurement points **P1** and **P2** due to a malfunction (such as contact welding) occurred in the second switch **43,** the notification unit **36** is energized to give the notification (emit light).

In the power conversion system of the present embodiment as described above, the notification unit **36** is configured to give the notification when the disconnection detection unit **37** determines that the disconnection in the cable **2** has occurred and the detection circuit **32** determines that the malfunction in the second switch **43** has occurred. Accordingly, the notification unit **36** can give the notification not only when the malfunction in the second switch **43** has occurred but also when the malfunction in the cable **2** (disconnection in the communication line **23**) has occurred.

As described above, the power conversion system **10** of the present embodiment includes the disconnection detection unit **37** configured to determine whether disconnection in the cable **2** has occurred. The notification unit **362** is configured to give the notification when the disconnection detection unit **37** determines that the disconnection in the cable **2** has occurred and the detection circuit **32** determines that the malfunction in the in-vehicle switch (second switch **43**) has occurred.

In the power conversion system **10** of the present embodiment, the detection circuit **32** includes the transmission unit **323** configured to transmit a signal indicative of the detection result of the detection circuit **32** (whether the malfunction in the in-vehicle switch has occurred) to the power conversion device **1** through the cable **2,** and the disconnection detection unit **37** configured to determine whether disconnection in the cable **2** has occurred. The transmission unit **323** and the disconnection detection unit **37** are provided in the connector **3.** The notification unit **362** is configured to give the notification when the disconnection detection unit **37** determines that the disconnection in the cable **2** has occurred and the detection circuit **32** determines that the malfunction in the in-vehicle switch (second switch **43**) has occurred.

In the power conversion system **10** of the present embodiment, the detection circuit **32** includes the transmission unit **328** configured to transmit a signal indicative of the detection result of the detection circuit **32** (whether the malfunction in the in-vehicle switch has occurred) to the electric vehicle **4,** and the disconnection detection unit **37** configured to determine whether disconnection in the cable **2** has occurred. The transmission unit **328** and the disconnection detection unit **37** are provided in the connector **3.** The notification unit **362** is configured to give the notification when the disconnection detection unit **37** determines that the disconnection in the cable **2** has occurred and the detection circuit **32** determines that the malfunction in the in-vehicle switch (second switch **43**) has occurred. The transmission unit **328** may be configured to transmit a notification indicative of the occurrence of the malfunction in the in-vehicle switch to the electric vehicle **4** when the disconnection detection unit **37** determines that the disconnection in the cable **2** has occurred and the detection circuit **32** determines that the malfunction in the in-vehicle switch (second switch **43**) has occurred.

### (EXAMPLE 2)

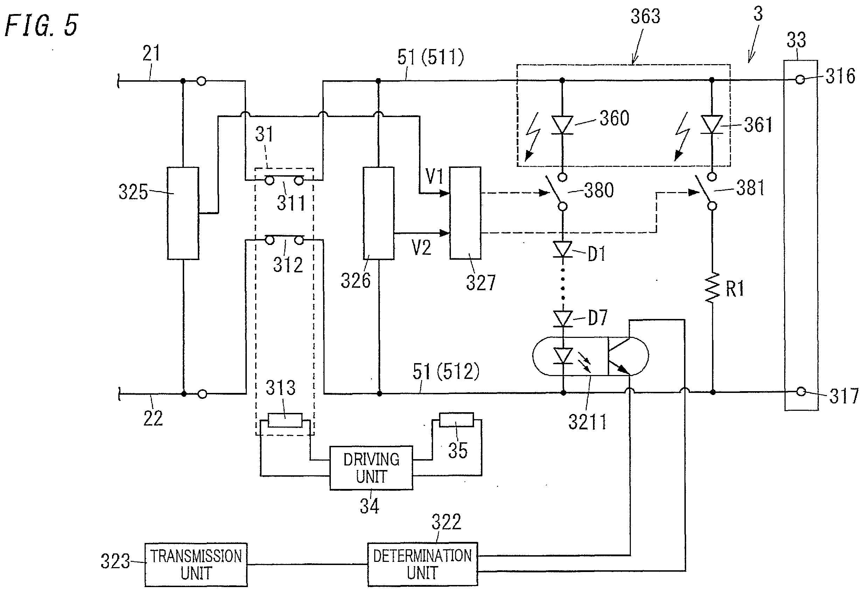

As illustrated in FIG. 5, a power conversion system of the present example differs from the power conversion system of Example 1, in structures of a detection circuit **32** and a notification unit **36.** Components common to those in the power conversion system of Example 1 are assigned same reference sings and explanations thereof are omitted.

The detection circuit **32** includes a first voltage measurement unit **325** configured to measure a voltage at part, between a first switch **31** and the power conversion device **1,** of a power supply path and a second voltage measurement unit **326** configured to measure a voltage at part, between the first switch **31** and the connection port **42** (contact part **33**), of the power supply path. The detection circuit **32** further includes a comparison unit **327** configured to make a comparison about a measured value **V1** of the first voltage measurement unit **325** and a measured value **V2** of the second voltage measurement unit **326.**

A notification unit (connector side notification unit) **363** includes two light emitting diodes **360** and **361.** One of the light emitting diodes referred to as a first light emitting diode **360** is a red light emitting diode, for example, and the other of the light emitting diodes referred to as a second light emitting diode **361** is a light emitting diode other than a red emitting diode, and may be a green light emitting diode. An anode of the first light emitting diode **360** is connected to a high-potential side line **511** of a first power supply path **51,** and a cathode thereof is connected to a low-potential side line **512** of the first power supply path **51** via a first switching device **380,** constant current diodes **D1** to **D7,** and a primary side of a photocoupler **3211.** An anode of the second light emitting diode **361** is connected to the high-potential side line **511** of the first power supply path **51,** and a cathode thereof is connected to the low-potential side line **512** of the first power supply path **51** via a second switching device **381** and a resistor **R1.**

The comparison unit **327** is configured to compare the measured values **V1** and **V2** with thresholds, respectively. The comparison unit **327** is configured to turn on the first switching device **380** and turn off the second switching device **381** when the measured value **V1** is less than the threshold (i.e., the measured value **V1** has an L level) and the measured value **V2** is equal to or more than the threshold (the measured value **V2** has an H level). The comparison unit **327** is configured to turn off the first switching device **380** and turn on the second switching device **381** when both the measured values **V1** and **V2** are equal to or greater than the thresholds (i.e., the measured values **V1** and **V2** have H levels). The comparison unit **327** is configured to turn off both the first switching device **380** and the second switching device **381** when the measured value **V2** is less than the threshold (i.e., the measured values **V1** and **V2** have L levels).

Detection operation of the detection circuit **32** will be described in further detail with reference to FIG. 5. First, description is given to a state ("state 1") where charging of a storage battery **41** or discharging of the storage battery **41** is performed normally. In the state 1, each of the measured value **V1** of the first voltage measurement unit **325** and the measured value **V2** of the second voltage measurement unit **326** would be equal to or more than a corresponding threshold. In this case, the comparison unit **327** determines that the system is in a normal conduction state, and turns off the first switching device **380** and turns on the second switching device **381.** As a result, the first light emitting diode **360** does not emit light but the second light emitting diode **361** emits light to give a notification indicating that the system is in the normal conduction state (state 1). In this state, the first switching device **380** is turned off and thus the photocoupler **3211** is not energized, the determination unit **322** determines that the system is in normal.

For example, when the first switch **31** is opened in response to an excess current flowing through the power supply path **5** in the state **1,** an electronic control unit **46** of an electric vehicle **4** operates to open the second switch **43.** When the second switch **43** is opened normally (when there is no contact welding), the measured value **V2** of the second voltage measurement unit **326** would be less than the threshold (i.e., the measured value **V2** has an L level) regardless of the measured value **V1** of the first voltage measurement unit **325** being more or less than the threshold. In detail, the measured value **V1** of the first voltage measurement unit **325** is equal to or more than the threshold (i.e., the measured value **V1** has an H level) when a voltage having a predetermined value or more is applied from the power conversion device **1,** and is less than the threshold (i.e., the measured value **V1** has an L level) when power supply from the power conversion device **1** is stopped. In each case, the measured value **V2** of the second voltage measurement unit **326** is less than the threshold (i.e., the measured value **V2** has an L level) when the first switch **31** and the second switch **43** are opened normally. In this case, the comparison unit **327** determines that no malfunction occurs in the second switch **43,** and turns off both the first switching device **380** and the second switching device **381.** As a result, none of the two light emitting diodes **360** and **361** of the notification unit **36** emits light so as to give a notification indicating that the system is in a not-powered state (states 3 and 4). In this state, the first switching device **380** is turned off and thus the photocoupler **3211** is not energized, the determination unit **322** determines that the system is in normal.

On the other hand, when the second switch **43** is not opened due to contact welding and power supply from the power conversion device **1** is stopped, the measured value **V1** of the first voltage measurement unit **325** would be less than the threshold (i.e., the measured value **V1** has an L level) and the measured value **V2** of the second voltage measurement unit **326** would be equal to or more than the threshold (i.e., the measured value **V2** has an H level). In this case, the comparison unit **327** determines that a malfunction has occurred in the second switch **43,** and turns on the first switching device **380** and turns off the second switching device **381.** As a result, the first light emitting diode **360** of the notification unit **36** emits light and the second light emitting diode **361** does not emit light so as to give a notification indicating that the system is in an abnormal state (state 2). In this state, the first switching device **380** is turned on and thus the photocoupler **3211** is energized, the determination unit **322** determines that the system is in abnormal.

As described above, in the power conversion system the notification unit **36** is configured to give different notifications when the detection result of the detection circuit **32** indicates that the malfunction has not occurred and when the detection result indicates that the malfunction has occurred. Accordingly, it is easy to identify whether the malfunction in the second switch **43** has occurred.

In the power conversion system the detection circuit **32** includes the first voltage measurement unit **325** configured to measure a voltage at part of the power supply path between the protection device (first switch **31**) and the power conversion device **1,** and the second voltage measurement unit **326** configured to measure a voltage at part of the power supply path between the protection device and the connection port **42.** The power conversion system further includes the comparison unit **327** configured to compare the measured value **V1** of the first voltage measurement unit **325** and the measured value **V2** of the second voltage measurement unit **326** with the respective thresholds. Accordingly, it is possible to easily identify whether the malfunction in the second switch **43** has occurred, based on a comparison result of the comparison unit **327.**

## Claims

1. A connector (3), wherein the connector (3) is connectable to a power conversion device (1) of a power conversion system (10) through a cable (2) and is configured to be detachably attached to a connection port (42) of an electric vehicle (4) equipped with a storage battery (41) so as to form a power supply path (5) between the power conversion device (1) and the storage battery (41);
the connector (3) including:
a detection circuit (32) configured to determine whether a malfunction in an in-vehicle switch (43) interposed in part, inside the electric vehicle (4), of the power supply path (5) has occurred;
a notification unit (36) configured to give a notification of a detection result of the detection circuit (32); and
a disconnection detection unit (37) configured to determine whether disconnection in the cable (2) has occurred,
the detection circuit (32) including:
a measurement unit (321) configured to measure a voltage at a measurement point (P1) which is set in part, inside the connector (3), of the power supply path (5);
a determination unit (322) configured to determine that the malfunction in the in-vehicle switch (43) has occurred, when the voltage measured with the measurement unit (321) exceeds a threshold, and
the detection circuit (32) being configured to determine whether the malfunction has occurred, based on a determination result of the determination unit (322), and
the notification unit (36) being configured to give the notification when the disconnection detection unit (37) determines that the disconnection in the cable (2) has occurred and the detection circuit (32) determines that the malfunction in the in-vehicle switch (43) has occurred.

2. A power conversion system (10) comprising:
a power conversion device (1) ;
a cable (2);
the connector (3) of claim 1, which is connected to the power conversion device (1) through the cable (2).

3. The power conversion system (10) of claim 2, wherein:
the detection circuit (32) further includes
a transmission unit (323) configured to transmit a signal indicative of the detection result to the power conversion device (1) through the cable (2), and
the transmission unit (323) and the disconnection detection unit (37) are provided in the connector (3).

4. The power conversion system (10) of claim 2, wherein:
the detection circuit (32) includes
a transmission unit (323) configured to transmit a signal indicative of the detection result to the electric vehicle (4), and
the transmission unit (323) and the disconnection detection unit (37) are provided in the connector (3).

5. The power conversion system (10) of any one of claims 2 to 4, wherein:
the connector (3) includes
a latching mechanism to be mechanically engaged with the connection port to keep connection between the connector (3) and the connection port, and
a release button (307) for canceling a latching condition of the latching mechanism in response to manual operation; and
the notification unit (36) is configured to illuminate the release button (307) to give the notification of the detection result.

6. The power conversion system (10) of any one of claims 2 to 5, wherein:
the measurement point includes a first measurement point (P1) in a high-potential side line (511) of the power supply path (51) and a second measurement point (P2) in a low-potential side line (522) of the power supply path (52);
the measurement unit (321) includes at least one diode component connected between the first measurement point (P1) and the second measurement point (P2); and
the notification unit (36) is connected between the first measurement point (P1) and the second measurement point (P2) so as to be connected in series with the at least one diode component such that the notification unit (36) operates with a voltage to be applied between the first measurement point (P1) and the second measurement point (P2).

7. The power conversion system (10) of claim 6, wherein:
the notification unit (36) includes a light emitting diode.

8. The power conversion system (10) of claim 6 or 7, wherein:
the measurement unit (321) further includes a photocoupler;
a primary side of the photocoupler serves as at least part of the at least one diode component and is connected between the first measurement point (P1) and the second measurement point (P2);
a secondary side of the photocoupler is to be turned on when the voltage between the first measurement point (P1) and the second measurement point (P2) measured with the measurement unit (321) exceeds the threshold; and
the determination unit (322) is configured to determine that the malfunction in the in-vehicle switch (43) has occurred, when the secondary side of the photocoupler is turned on.

9. The power conversion system (10) of any one of claims 6 to 8, wherein:
the measurement unit (321) further includes a relay connected in series with the at least one diode component; and
the connector (3) further includes a control unit (14) configured to turn on the relay in response to an instruction from the power conversion device (1).

10. The power conversion system (10) of any one of claims 2 to 5, wherein:
the notification unit (36) is configured to give different notifications when the detection result of the detection circuit (32) indicates that the malfunction has not occurred and when the detection result indicates that the malfunction has occurred.

11. The power conversion system (10) of any one of claims 2 to 10, further comprising a protection device which includes at least one of a switch and a fuse interposed in part, inside the connector (3), of the power supply path (5).

12. The power conversion system (10) of any one of claims 2 to 11, further comprising a protection device interposed in part, inside the connector (3), of the power supply path (5),
the detection circuit (32) including
a first voltage measurement unit (325) configured to measure a voltage at part of the power supply path (5) between the protection device and the power conversion device (1),
a second voltage measurement unit (326) configured to measure a voltage at part of the power supply path (5) between the protection device and the connection port (42), and
a comparison unit (327) configured to compare measured values of the first and second voltage measurement units with predetermined thresholds.

## Patentansprüche

1. Verbinder (3), wobei der Verbinder (3) mit einer Stromumwandlungsvorrichtung (1) eines Stromumwandlungssystems (10) durch ein Kabel (2) verbindbar und konfiguriert ist, um abnehmbar an einem Verbindungsport (42) eines Elektrofahrzeugs (4), das mit einer Speicherbatterie (41) ausgestattet ist, angebracht zu werden, um einen Stromversorgungsweg (5) zwischen der Stromumwandlungsvorrichtung (1) und der Speicherbatterie (41) zu bilden;
wobei der Verbinder (3) Folgendes aufweist:
eine Erfassungsschaltung (32), die konfiguriert ist, um zu bestimmen, ob eine Funktionsstörung in einem fahrzeugeigenen Schalter (43), der teils innerhalb des Elektrofahrzeugs (4) eingefügt ist, des Stromversorgungswegs (5) aufgetreten ist;
eine Bekanntgabeeinheit (36), die konfiguriert ist, um eine Bekanntgabe eines Erfassungsresultats der Erfassungsschaltung (32) zu geben, und
eine Trennungserfassungseinheit (37), die konfiguriert ist, um zu bestimmen, ob eine Trennung in dem Kabel (2) aufgetreten ist,
wobei die Erfassungsschaltung (32) Folgendes aufweist:
eine Messeinheit (321), die konfiguriert ist, um eine Spannung an einem Messpunkt (P1), der teils innerhalb des Verbinders (3) eingesetzt ist, des Stromversorgungswegs (5) zu messen;
eine Bestimmungseinheit (322), die konfiguriert ist, um zu bestimmen, dass die Funktionsstörung in dem fahrzeugeigenen Schalter (43) aufgetreten ist, wenn die Spannung, die mit der Messeinheit (321) gemessen wird, einen Schwellenwert überschreitet, und
wobei die Erfassungseinheit (32) konfiguriert ist, um basierend auf einem Bestimmungsresultat der Bestimmungseinheit (322) zu bestimmen, ob die Funktionsstörung aufgetreten ist, und
die Bekanntgabeeinheit (36) konfiguriert ist, um die Bekanntgabe zu geben, wenn die Trennungserfassungseinheit (37) bestimmt, dass das Trennen in dem Kabel (2) aufgetreten ist, und die Erfassungsschaltung (32) bestimmt, dass die Funktionsstörung in dem fahrzeugeigenen Schalter (43) aufgetreten ist.

2. Stromumwandlungssystem (10), das Folgendes umfasst:
eine Stromumwandlungsvorrichtung (1);
ein Kabel (2);
den Verbinder (3) nach Anspruch 1, der mit der Stromumwandlungsvorrichtung (1) durch das Kabel (2) verbunden ist.

3. Stromumwandlungssystem (10) nach Anspruch 2, wobei:
die Erfassungsschaltung (32) ferner Folgendes aufweist eine Übertragungseinheit (323), die konfiguriert ist, um ein Signal zu übertragen, das das Erfassungsresultat zu der Stromversorgungsvorrichtung (1) durch das Kabel (2) angibt,
und wobei die Übertragungseinheit (323) und die Trennungserfassungseinheit (37) in dem Verbinder (3) vorgesehen sind.

4. Stromumwandlungssystem (10) nach Anspruch 2, wobei:
die Erfassungsschaltung (32) Folgendes aufweist eine Übertragungseinheit (323), die konfiguriert ist, um ein Signal, das das Erfassungsresultat zu dem Elektrofahrzeug (4) angibt, zu übertragen, und
wobei die Übertragungseinheit (323) und die Trennungserfassungseinheit (37) in dem Verbinder (3) vorgesehen sind.

5. Stromumwandlungssystem (10) nach einem der Ansprüche 2 bis 4, wobei:
der Verbinder (3) Folgendes aufweist
einen Verriegelungsmechanismus, der mechanisch in den Verbindungsport eingerückt werden soll, um die Verbindung zwischen dem Verbinder (3) und dem Verbindungsport zu halten, und einen Freigabeknopf (307) zum Annullieren eines Verriegelungszustands des Verriegelungsmechanismus als Reaktion auf eine manuelle Betätigung, und
wobei die Bekanntgabeeinheit (36) konfiguriert ist, um den Freigabeknopf (307) zu beleuchten, um die Bekanntgabe des Erfassungsresultats zu geben.

6. Stromumwandlungssystem (10) nach einem der Ansprüche 2 bis 5, wobei:
der Messpunkt einen ersten Messpunkt (P1) in einer Leitung (511) der Seite mit hohem Potenzial des Stromversorgungswegs (51) und einen zweiten Messpunkt (P2) in einer Leitung (522) der Seite mit niedrigem Potenzial des Stromversorgungswegs (52) aufweist;
die Messeinheit (321) mindestens ein Diodenbauteil aufweist, das zwischen dem ersten Messpunkt (P1) und dem zweiten Messpunkt (P2) angeschlossen ist, und
die Bekanntgabeeinheit (36) zwischen dem ersten Messpunkt (P1) und dem zweiten Messpunkt (P2) angeschlossen ist, um mit dem mindestens einen Diodenbauteil in Reihe geschaltet zu sein, so dass die Bekanntgabeeinheit (36) mit einer Spannung arbeitet, die zwischen dem ersten Messpunkt (P1) und dem zweiten Messpunkt (P2) anzulegen ist.

7. Stromumwandlungssystem (10) nach Anspruch 6, wobei:
die Bekanntgabeeinheit (36) eine Licht emittierende Diode aufweist.

8. Stromumwandlungssystem (10) nach Anspruch 6 oder 7, wobei:
die Messeinheit (321) ferner einen Fotokoppler aufweist;
eine Primärseite des Fotokopplers als mindestens ein Teil des mindestens einen Diodenbauteils dient und zwischen dem ersten Messpunkt (P1) und dem zweiten Messpunkt (P2) angeschlossen ist;
eine Sekundärseite des Fotokopplers eingeschaltet werden soll, wenn die Spannung zwischen dem ersten Messpunkt (P1) und dem zweiten Messpunkt (P2), die mit der Messeinheit (321) gemessen wird, den Schwellenwert überschreitet, und die Bestimmungseinheit (322) konfiguriert ist, um zu bestimmen, dass die Funktionsstörung in dem fahrzeugeigenen Schalter (43) aufgetreten ist, wenn die Sekundärseite des Fotokopplers eingeschaltet wird.

9. Stromumwandlungssystem (10) nach einem der Ansprüche 6 bis 8, wobei:
die Messeinheit (321) ferner eine Relais aufweist, das mit dem mindestens einen Diodenbauteil in Reihe geschaltet ist, und
der Verbinder (3) ferner eine Steuereinheit (14) aufweist, die konfiguriert ist, um das Relais als Reaktion auf eine Anweisung von der Stromumwandlungsvorrichtung (1) einzuschalten.

10. Stromumwandlungssystem (10) nach einem der Ansprüche 2 bis 5, wobei:
die Bekanntgabeeinheit (36) konfiguriert ist, um unterschiedliche Bekanntgaben zu geben, wenn das Erfassungsresultat der Erfassungsschaltung (32) angibt, dass die Funktionsstörung nicht aufgetreten ist, und wenn das Erfassungsresultat angibt, dass die Funktionsstörung aufgetreten ist.

11. Stromumwandlungssystem (10) nach einem der Ansprüche 2 bis 10, die des Weiteren eine Schutzvorrichtung umfasst, die mindestens einen eines Schalters und einer Sicherung aufweist, der/die teils innerhalb des Verbinders (3) des Stromversorgungswegs (5) eingefügt ist.

12. Stromumwandlungssystem (10) nach einem der Ansprüche 2 bis 11, das des Weiteren eine Schutzvorrichtung umfasst, die teils innerhalb des Verbinders (3) des Stromversorgungswegs (5) eingefügt ist,
wobei die Erfassungsschaltung (32) Folgendes aufweist eine erste Spannungsmesseinheit (325), die konfiguriert ist, um eine Spannung an einem Teil des Stromversorgungswegs (5) zwischen der Schutzvorrichtung und der Stromumwandlungsvorrichtung (1) zu messen,
eine zweite Spannungsmesseinheit (326), die konfiguriert ist, um eine Spannung an einem Teil des Stromversorgungswegs (5) zwischen der Schutzvorrichtung und dem Verbindungsport (42) zu messen, und
eine Vergleichseinheit (327), die konfiguriert ist, um Messwerte der ersten und zweiten Spannungsmesseinheit mit vorbestimmten Schwellenwerten zu vergleichen.

## Revendications

1. Connecteur (3), dans lequel le connecteur (3) peut être connecté à un dispositif de conversion de puissance (1) d'un système de conversion de puissance (10) par l'intermédiaire d'un câble (2) et est configuré pour être attaché de manière détachable à un port de connexion (42) d'un véhicule électrique (4) équipé d'une batterie d'accumulateurs (41) de manière à former un trajet d'alimentation (5) entre le dispositif de conversion de puissance (1) et la batterie d'accumulateurs (41) ;
le connecteur (3) comprenant :
un circuit de détection (32) configuré pour déterminer si un dysfonctionnement d'un commutateur dans le véhicule (43) interposé dans une partie, à l'intérieur du véhicule électrique (4), du trajet d'alimentation (5) s'est produit ;
une unité de notification (36) configurée pour donner une notification d'un résultat de détection du circuit de détection (32) ; et
une unité de détection de déconnexion (37) configurée pour déterminer si une déconnexion du câble (2) s'est produite,
le circuit de détection (32) comprenant :
une unité de mesure (321) configurée pour mesurer une tension au niveau d'un point de mesure (P1) qui est établi dans une partie, à l'intérieur du connecteur (3), du trajet d'alimentation (5) ;
une unité de détermination (322) configurée pour déterminer que le dysfonctionnement du commutateur dans le véhicule (43) s'est produit, lorsque la tension mesurée avec l'unité de mesure (321) dépasse un seuil, et
le circuit de détection (32) étant configuré pour déterminer si le dysfonctionnement s'est produit, sur la base d'un résultat de détermination de l'unité de détermination (322), et
l'unité de notification (36) étant configurée pour donner la notification lorsque l'unité de détection de déconnexion (37) détermine que la déconnexion du câble (2) s'est produite et lorsque le circuit de détection (32) détermine que le dysfonctionnement dans le commutateur dans le véhicule (43) s'est produit.

2. Système de conversion de puissance (10) comprenant :
un dispositif de conversion de puissance (1) ;
un câble (2) ;
le connecteur (3) selon la revendication 1, qui est connecté au dispositif de conversion de puissance (1) par l'intermédiaire du câble (2).

3. Système de conversion de puissance (10) selon la revendication 2, dans lequel :
le circuit de détection (32) comprend en outre
une unité de transmission (323) configurée pour transmettre un signal indicatif du résultat de détection au dispositif de conversion de puissance (1) par l'intermédiaire du câble (2), et l'unité de transmission (323) et l'unité de détection de déconnexion (37) sont prévues dans le connecteur (3) .

4. Système de conversion de puissance (10) selon la revendication 2, dans lequel :
le circuit de détection (32) comprend
une unité de transmission (323) configurée pour transmettre un signal indicatif du résultat de détection au véhicule électrique (4), et
l'unité de transmission (323) et l'unité de détection de déconnexion (37) sont prévues dans le connecteur (3).

5. Système de conversion de puissance (10) selon l'une quelconque des revendications 2 à 4, dans lequel :
le connecteur (3) comprend
un mécanisme de verrouillage destiné à être mis en prise mécaniquement avec le port de connexion pour maintenir la connexion entre le connecteur (3) et le port de connexion, et
un bouton de libération (307) pour annuler une condition de verrouillage du mécanisme de verrouillage en réponse à une opération manuelle ; et
l'unité de notification (36) est configurée pour éclairer le bouton de libération (307) pour donner la notification du résultat de détection.

6. Système de conversion de puissance (10) selon l'une quelconque des revendications 2 à 5, dans lequel :
le point de mesure comprend un premier point de mesure (P1) dans une ligne côté potentiel élevé (511) du trajet d'alimentation (51) et un deuxième point de mesure (P2) dans une ligne côté faible potentiel (522) du trajet d'alimentation (52) ;
l'unité de mesure (321) comprend au moins un composant de diode connecté entre le premier point de mesure (P1) et le deuxième point de mesure (P2) ; et
l'unité de notification (36) est connectée entre le premier point de mesure (P1) et le deuxième point de mesure (P2) de manière à être connectée en série avec ledit au moins un composant de diode de sorte que l'unité de notification (36) fonctionne avec une tension à appliquer entre le premier point de mesure (P1) et le deuxième point de mesure (P2).

7. Système de conversion de puissance (10) selon la revendication 6, dans lequel :
l'unité de notification (36) comprend une diode électroluminescente.

8. Système de conversion de puissance (10) selon la revendication 6 ou 7, dans lequel :
l'unité de mesure (321) comprend en outre un photocoupleur ;
un côté primaire du photocoupleur sert au moins en tant que partie dudit au moins un composant de diode et est connecté entre le premier point de mesure (P1) et le deuxième point de mesure (P2) ;
un côté secondaire du photocoupleur doit être fermé lorsque la tension entre le premier point de mesure (P1) et le deuxième point de mesure (P2) mesurée avec l'unité de mesure (321) dépasse le seuil ; et
l'unité de détermination (322) est configurée pour déterminer que le dysfonctionnement du commutateur dans le véhicule (43) s'est produit, lorsque le côté secondaire du photocoupleur est fermé.

9. Système de conversion de puissance (10) selon l'une quelconque des revendications 6 à 8, dans lequel :
l'unité de mesure (321) comprend en outre un relais connecté en série avec ledit au moins un composant de diode ; et
le connecteur (3) comprend en outre une unité de commande (14) configurée pour fermer le relais en réponse à une instruction provenant du dispositif de conversion de puissance (1) .

10. Système de conversion de puissance (10) selon l'une quelconque des revendications 2 à 5, dans lequel :
l'unité de notification (36) est configurée pour donner différentes notifications lorsque le résultat de détection du circuit de détection (32) indique que le dysfonctionnement ne s'est pas produit et lorsque le résultat de détection indique que le dysfonctionnement s'est produit.

11. Système de conversion de puissance (10) selon l'une quelconque des revendications 2 à 10, comprenant en outre un dispositif de protection qui comprend au moins l'un d'un commutateur et d'un fusible interposé dans une partie, à l'intérieur du connecteur (3), du trajet d'alimentation (5).

12. Système de conversion de puissance (10) selon l'une quelconque des revendications 2 à 11, comprenant en outre un dispositif de protection interposé dans une partie, à l'intérieur du connecteur (3), du trajet d'alimentation (5),
le circuit de détection (32) comprenant
une première unité de mesure de tension (325) configurée pour mesurer une tension au niveau d'une partie du trajet d'alimentation (5) entre le dispositif de protection et le dispositif de conversion de puissance (1),
une deuxième unité de mesure de tension (326) configurée pour mesurer une tension au niveau d'une partie du trajet d'alimentation (5) entre le dispositif de protection et le port de connexion (42), et
une unité de comparaison (327) configurée pour comparer les valeurs mesurées des première et deuxième unités de mesure de tension avec des seuils prédéterminés.
